(19) **Europäisches Patentamt European Patent Office Office européen des brevets**

(11) **EP 4 081 844 B1**

(12) **FASCICULE DE BREVET EUROPEEN**

(45) Date de publication et mention de la délivrance du brevet:
**26.02.2025 Bulletin 2025/09**

(21) Numéro de dépôt: **20827994.3**

(22) Date de dépôt: **21.12.2020**

(51) Classification Internationale des Brevets (IPC):
*G02B 6/42* *(2006.01)* *G02F 1/295* *(2006.01)*
*H04B 10/50* *(2013.01)* *H04B 10/564* *(2013.01)*
*H01Q 3/26* *(2006.01)*

(52) Classification Coopérative des Brevets (CPC):
**G02B 6/42;** G02F 1/2955; H04B 2210/006

(86) Numéro de dépôt international:
**PCT/EP2020/087385**

(87) Numéro de publication internationale:
**WO 2021/130149 (01.07.2021 Gazette 2021/26)**

(54) **EMETTEUR OPTOÉLECTRONIQUE A ANTENNE RESEAU A COMMANDE DE PHASE COMPORTANT UN DISPOSITIF DE COMMANDE INTEGRE**

OPTOELEKTRONISCHER SENDER MIT PHASENGESTEUERTER GRUPPENANTENNE MIT INTEGRIERTER STEUERVORRICHTUNG

OPTOELECTRONIC TRANSMITTER WITH PHASED ARRAY ANTENNA COMPRISING AN INTEGRATED CONTROL DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2019 FR 1915422**

(43) Date de publication de la demande:
**02.11.2022 Bulletin 2022/44**

(73) Titulaire: **Commissariat à l'Energie Atomique et aux Energies Alternatives 75015 Paris (FR)**

(72) Inventeurs:
• **FOWLER, Daivid 38054 GRENOBLE CEDEX 09 (FR)**
• **GUERBER, Sylvain 38054 GRENOBLE CEDEX 09 (FR)**
• **SZELAG, Bertrand 38054 GRENOBLE CEDEX 09 (FR)**

(74) Mandataire: **Brevalex Tour Trinity 1 B Place de la Défense 92400 Courbevoie (FR)**

(56) Documents cités:
WO-A2-2018/160729     WO-A2-2018/160729
US-A1- 2017 371 227     US-A1- 2017 371 227
US-A1- 2019 170 875     US-A1- 2019 170 875

# EP 4 081 844 B1

## Description

### DOMAINE TECHNIQUE

Le domaine de l'invention est celui des circuits photoniques sur puce, et plus précisément de celui des émetteurs optoélectroniques, du type antenne réseau à commande de phase, réalisés sur une puce photonique. L'invention peut trouver une application notamment dans le domaine des LIDAR (*Light Detection and Ranging, en anglais*).

### ÉTAT DE LA TECHNIQUE ANTÉRIEURE

Les émetteurs optoélectroniques à antenne réseau à commande de phase (OPA, pour *Optical Phased Array*, en anglais) sont des dispositifs optoélectroniques permettant d'émettre en espace libre un faisceau lumineux, monochromatique, de manière directionnelle. Ils trouvent une application notamment dans le domaine de la détection et de l'estimation d'une distance par laser (LIDAR), mais également dans le domaine des communications optiques en espace libre, des écrans holographiques et de l'imagerie médicale.

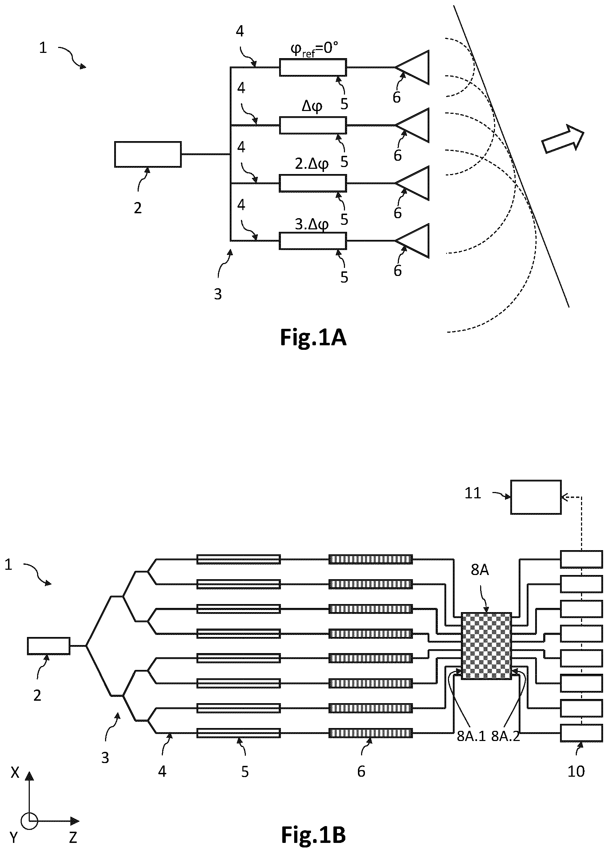

La figure 1A illustre de manière schématique le principe de fonctionnement d'un tel émetteur optoélectronique 1. Une source laser 2 émet un signal optique qui est distribué par un diviseur de puissance 3 dans N bras 4 de l'émetteur optoélectronique 1. Chaque bras 4 comporte un déphaseur 5 et un émetteur élémentaire 6 également appelé antenne optique. Chaque émetteur élémentaire 6 émet un signal optique en espace libre, par exemple par diffraction, les signaux optiques se combinant ensuite par interférence pour former un faisceau lumineux. Celui-ci présente un diagramme d'émission en champ lointain déterminé notamment par la phase relative Δφ appliquée par les déphaseurs 5 aux signaux optiques se propageant dans les bras 4.

De tels émetteurs optoélectroniques 1 peuvent être réalisés en photonique intégrée, c'est-à-dire que ses différents composants optiques (guides d'onde, diviseur de puissance, émetteurs élémentaires...) sont réalisés sur et à partir d'une puce photonique.

A ce titre, la figure 1B illustre de manière schématique et partielle un exemple d'un tel émetteur optoélectronique 1 réalisé sur puce photonique et comportant un dispositif de commande intégré, tel que décrit dans l'article de Hulme et al intitulé Fully integrated hybrid silicon two dimensional beam scanner, Opt. Express 23 (5), 5861-5874 (2015).

Cet émetteur optoélectronique 1 comporte, outre la source laser 2, le diviseur de puissance 3 et le réseau de déphaseurs 5 et d'émetteurs élémentaires 6, un dispositif de commande formé d'une lentille à gradient d'indice 8A couplée aux extrémités de sortie des émetteurs élémentaires 6 au niveau de sa face d'entrée 8A.1, et à un réseau de photodétecteurs 10 au niveau de sa face de sortie 8A.2. Le dispositif de commande permet de déterminer la phase relative Δφ effectivement présente entre les signaux optiques se propageant dans les bras 4. Pour cela, une partie non diffractée de ces signaux optiques est transmise par les émetteurs élémentaires 6 à la lentille 8A par des guides d'onde d'entrée 7. La lentille 8A fournit une image du rayonnement optique en champ lointain émis par l'émetteur optoélectronique, laquelle est alors détectée par les photodétecteurs 10. Un module de commande 11 permet d'obtenir l'information optique en champ lointain (notamment l'angle Φ de directivité du faisceau lumineux par rapport à l'axe Y dans le plan XY) et ainsi de calibrer l'émetteur optoélectronique 1.

Cependant, la lentille à gradient d'indice est de type à cristaux photoniques, et est formée d'une pluralité de trous de différents diamètres sub-longueur d'onde réalisés dans une couche mince de silicium d'un substrat SOI. Les trous sont agencés de sorte que l'indice effectif du champ optique présente un profil parabolique suivant la largeur de la lentille. Or, il apparaît que ces trous formant le cristal photonique de la lentille sont particulièrement complexes à réaliser, et que les imperfections de réalisation impactent fortement les performances d'un tel émetteur optoélectronique. La publication WO 2018/160729 A2 divulgue un système de détection optique tridimensionnel (3D) pour un véhicule qui comprennent une architecture modulaire. La lumière peut être transmise à un module de traitement de signal optique, qui peut comprendre un circuit intégré photonique (PIC) pouvant créer au moins un signal ayant des caractéristiques d'amplitude, de phase et spectrales adaptées. La pluralité de signaux optiques traités par le module de traitement de signal optique peut être envoyée à des unités de direction de faisceau distribuées autour du véhicule. Les unités de direction peuvent diriger une pluralité de faisceaux optiques vers des cibles. Le signal optique de retour peut être détecté par un récepteur PIC comprenant un réseau de capteurs et utilisant une technique de détection d'intensité directe ou une technique de détection cohérente. Le signal optique de retour peut être converti en un signal électrique par le réseau de capteurs, qui peut ensuite être traité par l'unité de traitement de signal électronique, et des informations concernant l'emplacement et la vitesse des cibles peuvent être quantifiées.

### EXPOSÉ DE L'INVENTION

L'invention a pour objectif de remédier au moins en partie aux inconvénients de l'art antérieur, et plus particulièrement de proposer un émetteur optoélectronique antenne réseau à commande de phase sur puce photonique dont l'impact du procédé de fabrication sur ses performances est réduit voire écarté.

Pour cela, l'objet de l'invention est un émetteur optoélectronique à antenne réseau à commande de phase sur puce photonique, comportant :

- un diviseur de puissance, destiné à être couplé en entrée à une source laser, et couplé en sortie à N guides d'onde formant les bras de l'émetteur optoélectronique, avec N>1 ;
- un réseau de déphaseurs et d'émetteurs élémentaires, disposés dans les bras, les émetteurs élémentaires étant alignés latéralement et s'étendant de manière parallèle entre eux ;
- un dispositif de commande intégré comportant : des guides d'onde d'entrée, couplés aux émetteurs élémentaires ; une lentille de focalisation, comportant une face d'entrée couplée aux guides d'onde d'entrée, et une face de sortie ; des guides d'onde de sortie, couplés à la face de sortie ; des photodiodes, couplées aux guides d'onde de sortie ; un module de commande adapté à commander les déphaseurs en fonction de signaux reçus par les photodiodes.

Selon l'invention, la lentille de focalisation est une lentille interférométrique dont les faces d'entrée et de sortie sont courbes et délimitent une région à propagation libre d'indice de réfraction homogène, la face de sortie s'étendant suivant une ligne focale de la lentille de focalisation.

De plus, les guides d'onde d'entrée sont raccordés à la face d'entrée de manière orthogonale à celle-ci.

Enfin, un indice effectif des modes guidés, dans une portion dite de correction des guides d'onde d'entrée, est adapté de sorte que les chemins optiques des guides d'onde d'entrée sont identiques entre eux.

Certains aspects préférés, mais non limitatifs de cet émetteur optoélectronique sont les suivants.

Les guides d'onde d'entrée peuvent présenter chacun, dans la portion de correction, une variation d'au moins une dimension transversale, ladite variation de dimension transversale étant prédéfinie pour chaque guide d'onde d'entrée de sorte que les chemins optiques des guides d'onde d'entrée sont identiques entre eux.

Chaque guide d'onde d'entrée peut présenter, dans la portion de correction, une variation adiabatique de la largeur, allant d'une valeur de référence $W_{e0}$ identique pour chaque guide d'onde d'entrée à une valeur maximale $W_{ec(i)}$ différente d'un guide d'onde d'entrée à l'autre.

L'émetteur optoélectronique peut comporter des guides d'onde dits additionnels réalisés en un indice de réfraction différent de celui des guides d'onde d'entrée, s'étendant uniquement dans la portion de correction, et agencés en regard et de manière parallèle aux guides d'onde d'entrée de manière à autoriser un couplage modal avec les guides d'onde d'entrée, les guides d'onde additionnels présentant une longueur prédéfinie pour chacun d'entre eux de sorte que les chemins optiques des guides d'onde d'entrée sont identiques entre eux.

Des déphaseurs additionnels peuvent être couplés auxdits guides d'onde d'entrée dans la portion de correction, et peuvent appliquer un déphasage relatif entre les modes guidés dans les guides d'onde d'entrée prédéfini pour chacun d'entre eux de sorte que les chemins optiques des guides d'onde d'entrée sont identiques entre eux.

La lentille de focalisation peut être un coupleur en étoile ou un réseau échelle.

La lentille de focalisation peut présenter un montage de Rowland ou une configuration confocale.

La puce photonique peut être réalisée à partir d'un substrat SOI.

L'émetteur optoélectronique peut comporter la source laser. Celle-ci peut être assemblée sur une surface dite supérieure de la puce photonique.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A, déjà décrite, est une vue schématique et partielle d'un émetteur optoélectronique à antenne réseau à commande de phase ;

la figure 1B, déjà décrite, est une vue de dessus, schématique et partielle, d'un tel émetteur optoélectronique, comportant un dispositif de commande intégré, selon un exemple de l'art antérieur ;

la figure 2 est une vue de dessus, schématique et partielle, d'un émetteur optoélectronique à antenne réseau à commande de phase selon un mode de réalisation, dans lequel la lentille interférométrique est un coupleur en étoile ;

les figures 3A à 3C sont des vues de dessus, schématiques et partielles, d'une partie de l'émetteur optoélectronique illustré sur la fig.2, illustrant la focalisation du champ optique en trois zones différentes de la face de sortie de la lentille interférométrique ;

la figure 4A est une vue de dessus, schématique et partielle, d'une partie de l'émetteur optoélectronique illustré sur la fig.2, illustrant le dimensionnement de la lentille interférométrique en montage de Rowland ; et les figures 4B et 4C sont des vues en détail d'une zone de la face d'entrée (fig.4B) et d'une zone de la face de sortie (fig.4C) de la lentille interférométrique illustrée sur la fig.4A ;

la figure 5 est une vue de dessus, schématique et partielle d'une partie de l'émetteur optoélectronique illustré sur la fig.2, illustrant la variation longitudinale en largeur des guides d'onde d'entrée dans la portion de correction ;

la figure 6 est en coupe et éclatée, schématique et partielle, d'une partie de l'émetteur optoélectronique selon une variante de réalisation, dans laquelle des guides d'onde additionnels sont couplés aux guides d'onde d'entrée dans la portion de correction ;

la figure 7 est en coupe et éclatée, schématique et partielle, d'une partie de l'émetteur optoélectronique selon une autre variante de réalisation, dans laquelle des déphaseurs thermo-optiques sont disposés au niveau des guides d'onde d'entrée dans la portion de correction ;

la figure 8 est une vue de dessus, schématique et partielle, d'un émetteur optoélectronique à antenne réseau à commande de phase selon un autre mode de réalisation, dans lequel la lentille interférométrique est un réseau échelle ;

la figure 9A et 9B illustrent, en vue de dessus et en coupe transversale, une partie de l'émetteur optoélectronique selon deux autres variantes de réalisation, dans laquelle des portions à changement de phase sont disposées au niveau des guides d'onde d'entrée dans la portion de correction.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un émetteur optoélectronique à antenne réseau à commande de phase, comportant un dispositif de commande intégré. Un tel émetteur optoélectronique est réalisé sur puce photonique. Il est adapté à émettre un faisceau lumineux dont l'intensité présente, en champ lointain, une répartition angulaire déterminée autour d'un axe d'émission principal. On appelle 'diagramme d'émission en champ lointain' cette répartition angulaire du faisceau lumineux en champ lointain émis par l'émetteur optoélectronique. Il se distingue ainsi des diagrammes d'émission en champ proche des émetteurs élémentaires (antennes optiques). Le champ lointain (ou zone de Fraunhofer) correspond à une distance D supérieure au rapport entre le carré d'une grande dimension de l'émetteur élémentaire (ici, la longueur $L_{ee}$ suivant l'axe Z) sur la longueur d'onde d'émission $\lambda_e$, autrement dit : $D > 2L_{ee}^2/\lambda_e$. Le diagramme d'émission en champ lointain peut être ici ajusté par le dispositif de commande intégré.

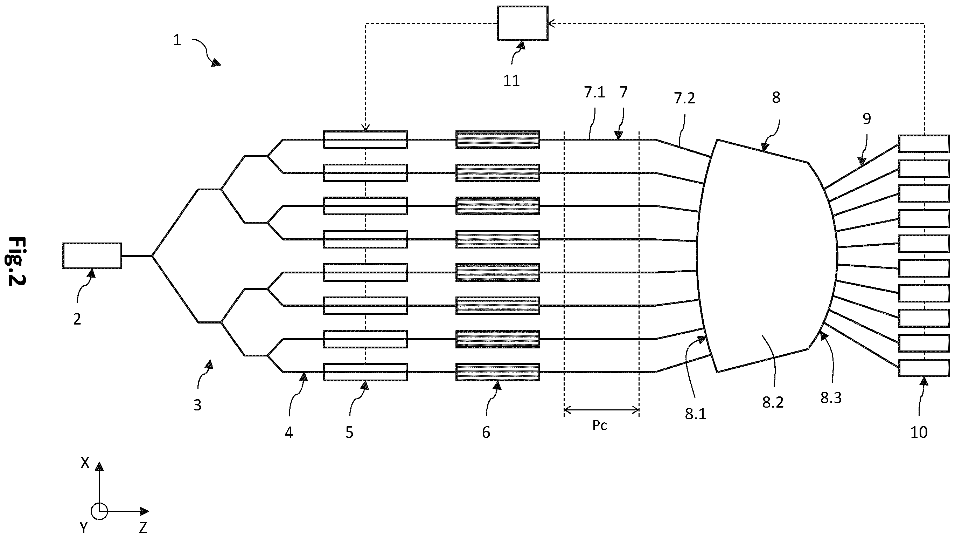

La figure 2 est une vue schématique et partielle d'un émetteur optoélectronique 1 selon un mode de réalisation. Dans cet exemple, l'émetteur optoélectronique 1 comporte une source laser 2, un diviseur de puissance 3, un réseau de déphaseurs 5 et d'émetteurs élémentaires 6. Il comporte également un dispositif de commande, connecté aux déphaseurs 5, permettant de déterminer voire modifier le déphasage $\Delta\varphi$ appliqué aux signaux optiques circulant dans les N bras 4, pour ainsi améliorer les performances de l'émetteur optoélectronique 1, et notamment générer le diagramme d'émission voulu du faisceau lumineux en champ lointain émis par l'émetteur optoélectronique 1.

On définit ici et pour la suite de la description un repère direct orthonormé XYZ, où le plan XZ est parallèle au plan de la puce photonique, et l'axe Z est orienté suivant l'axe des émetteurs élémentaires 6, l'axe Y étant ainsi orienté vers l'espace libre dans lequel le faisceau lumineux est émis par l'émetteur optoélectronique 1.

L'émetteur optoélectronique 1 est intégré sur une puce photonique, par exemple dans le cadre de la technologie dite photonique sur silicium. La puce photonique, également appelée circuit intégré photonique (PIC, pour *Photonic Integrated Circuit,* en anglais), comporte un substrat support (non représenté) à partir duquel peuvent être réalisés des composants photoniques actifs (modulateurs, diodes...) et passifs (guides d'onde, multiplexeurs ou démultiplexeurs...) couplés optiquement les uns aux autres. Dans le cadre de la photonique sur silicium, le substrat support et les composants photoniques sont réalisés à base de silicium. Le substrat support peut ainsi être de type SOI *(Silicon On Insulator,* en anglais).

L'émetteur optoélectronique 1 comporte une source laser 2 adaptée à émettre un signal optique monochromatique pulsé ou continu, de longueur d'onde $\lambda_e$. La longueur d'onde peut être, à titre illustratif, égale à 905nm. La source laser 2 peut être accordable en longueur d'onde, notamment pour modifier l'angle d'émission $\theta$ que forme le faisceau lumineux en champ lointain émis par l'émetteur optoélectronique vis-à-vis de l'axe Y dans le plan YZ. La source laser 2 peut être une source hybride formée d'un milieu à gain réalisé à base d'un composé III/V et collé à la surface de la puce photonique. Des réflecteurs optiques de type miroirs de Bragg peuvent ainsi être réalisés dans un guide d'onde intégré et couplé au milieu à gain. En variante, l'émetteur optoélectronique 1 peut ne pas comporter la source laser 2, celle-ci pouvant être déportée et donc non assemblée au contact de la surface de la puce photonique. Elle peut alors être couplée à un guide d'onde intégré de la puce photonique, notamment par un coupleur à réseau.

Un diviseur de puissance 3 est couplé à la sortie de la source laser 2. Il comporte ainsi un port d'entrée et N ports de sortie, avec N > 1. Le nombre N définit le nombre de bras 4 de l'émetteur optoélectronique 1. Dans cet exemple, le diviseur de puissance 3 est formé de plusieurs diviseurs de type MMI (*Multimode Interferometer,* en anglais) agencés en cascade, mais d'autres types de composants optiques peuvent être utilisés.

L'émetteur optoélectronique 1 comporte un réseau de N guides d'onde 4, de préférence parallèles entre eux, chacun s'étendant entre une première extrémité couplée à un port de sortie du diviseur de puissance 3 et une deuxième extrémité couplée à un émetteur élémentaire 6. Chaque guide d'onde 4 est donc adapté à recevoir un signal optique issu du diviseur de puissance 3, et à permettre la propagation de ce signal optique jusqu'à un émetteur élémentaire 6.

L'émetteur optoélectronique 1 comporte également un réseau de déphaseurs 5 et d'émetteurs élémentaires 6. Plus précisément, une pluralité de bras 4 est équipée d'au moins un déphaseur 5 adapté à modifier la phase du signal optique circulant dans le bras considéré, et ainsi de générer une différence de phase $\Delta\varphi$, ou phase relative, entre les signaux optiques circulant dans les bras adjacents 4. Les déphaseurs 5 sont disposés entre le diviseur de puissance 3 et les émetteurs élémentaires 6. Chaque bras 4 peut être équipé d'un déphaseur 5, ou seulement une partie des bras 4, comme par exemple un bras sur deux. De plus, le bras de référence peut ne pas comporter de déphaseurs 5.

Les déphaseurs 5 peuvent être des déphaseurs à effet électro-réfractif ou à effet thermo-optique. Dans les deux cas, la modification de la phase est obtenue par une modification de l'indice de réfraction du matériau formant le cœur du guide d'onde 4 considéré. Cette modification de l'indice de réfraction peut être obtenue par modification de la densité en porteurs libres dans le cas du déphaseur électro-réfractif, ou par modification de la température appliquée dans le cas du déphaseur thermo-optique.

Les déphaseurs 5 sont de préférence adaptés à appliquer une même valeur $\Delta\varphi$ de phase relative aux signaux optiques se propageant dans les bras 4, de manière à obtenir un angle $\Phi$ non nul déterminé de l'axe d'émission principal vis-à-vis de l'axe Y dans le plan XY (orthogonal à l'axe des émetteurs élémentaires 6). Cependant, la phase relative $\Delta\varphi$ peut ne pas être identique entre les bras 4, soit pour obtenir un diagramme en champ lointain différent, soit pour tenir compte et compenser d'éventuelles erreurs de phase. Ces erreurs de phase peuvent provenir d'une dégradation dans le temps de certains composants de l'émetteur optoélectronique 1, des non-uniformités lors du procédé de fabrication, des tolérances non nulles du procédé de fabrication, de l'impact de l'environnement de l'émetteur optoélectronique 1 (par ex., effet éventuel des éléments d'encapsulation (*packaging*) recouvrant les émetteurs élémentaires).

Les déphaseurs 5 sont de préférence connectés au module de commande 11 décrit plus loin. En fonction des signaux de commande envoyés par le module de commande 11, les déphaseurs 5 peuvent générer dans les signaux optiques circulant dans les différents bras 4 une phase relative $\Delta\varphi$ prédéterminée.

L'émetteur optoélectronique 1 comporte N émetteurs élémentaires 6, ou antennes optiques, couplés aux bras 4, et donc disposés en aval des déphaseurs 5. La phase relative $\Delta\varphi$ entre les signaux optiques émis par les émetteurs élémentaires 6 détermine notamment la valeur de l'angle $\Phi$ que forme l'axe d'émission principal du faisceau lumineux en champ lointain vis-à-vis de l'axe Y dans le plan XY de l'émetteur optoélectronique 1.

Les émetteurs élémentaires 6 sont ici des réseaux de diffraction formés dans des guides d'onde des bras 4. Ils s'étendent suivant l'axe Z de manière parallèle entre eux et sont alignés suivant l'axe X, autrement dit leurs premières extrémités présentent la même position suivant l'axe Z, tout comme leurs deuxièmes extrémités. Ils sont espacés les uns des autres d'une distance de préférence comprise entre $\lambda_e/2$ et $2\lambda_e$. A titre informatif, le nombre N d'émetteurs élémentaires peut aller d'une dizaine à une dizaine de milliers.

Ainsi, les signaux optiques circulant dans les bras 4 sont en partie transmis en espace libre par diffraction par les émetteurs élémentaires 6. Les signaux optiques extraits se propagent en espace libre, se recombinent par interférence, et forment ainsi en champ lointain le faisceau lumineux émis par l'émetteur optoélectronique 1 dont la répartition angulaire autour de l'axe d'émission principal est déterminée et définit le diagramme d'émission en champ lointain de l'émetteur optoélectronique 1.

L'angle $\theta$ que forme l'axe d'émission principal vis-à-vis de l'axe Y dans le plan YZ dépend, de manière connue, de la longueur d'onde d'émission $\lambda_e$ de la source laser 2 et de la période $\Lambda$ du réseau de diffraction que forment les émetteurs élémentaires 6. Comme indiqué précédemment, l'angle $\Phi$ que forme l'axe d'émission principal vis-à-vis de l'axe Y dans le plan XY dépend de la valeur de la phase relative $\Delta\varphi$ appliquée par les déphaseurs 5 aux signaux optiques circulant dans les bras 4. Il est généralement souhaité qu'une phase relative $\Delta\varphi$ nulle se traduise par un angle $\Phi$ nul, c'est-à-dire que l'axe d'émission principal du faisceau lumineux en champ lointain est parallèle à l'axe Y.

Par ailleurs, les émetteurs élémentaires présentent ici une efficacité d'extraction inférieure à 100%, se traduisant par le fait que l'intensité $I_{out}$ du signal optique (mode guidé) en sortie des émetteurs élémentaires 6 suivant l'axe Z est non nulle. Pour cela, la longueur $L_{ee}$ des émetteurs élémentaires est ajustée de sorte que l'intensité $I_{out}$ du mode guidé à la deuxième extrémité des émetteurs élémentaires 6 présente une valeur prédéfinie non nulle. En variante ou en complément, l'intensité $I_{out}$ non nulle peut être obtenue en ajustant la profondeur de gravure des dents du réseau formant l'émetteur élémentaire, et/ou en ajustant le taux de remplissage du réseau (*filling factor*, en anglais), c'est-à-dire le rapport entre la longueur d'une dent sur la longueur d'un creux, sur une période (formée d'une dent et d'un creux) de l'émetteur élémentaire.

Cependant, il peut être nécessaire de commander ou corriger la valeur $\Delta\varphi$ de la phase relative appliquée par les déphaseurs 5. Comme mentionné précédemment, ce peut être le cas pour calibrer l'émetteur optoélectronique 1, par exemple pour qu'une phase relative $\Delta\varphi$ nulle se traduise effectivement par un angle $\Phi$ nul de l'axe d'émission principal, i.e une orientation parallèle à l'axe Y dans le plan XY. Ce peut être le cas également pour compenser les erreurs de phase issues du procédé de fabrication ou du vieillissement de certains composants de l'émetteur optoélectronique. Ce peut être enfin le cas pour modifier en temps réel et de manière précise la valeur de l'angle $\Phi$, de sorte que le diagramme d'émission en champ lointain présente les caractéristiques voulues.

Pour cela, l'émetteur optoélectronique 1 comporte un dispositif de commande formé d'une lentille interférométrique de focalisation 8, d'une pluralité de photodétecteurs 10 et d'un module de commande 11. Le dispositif de commande comporte également N guides d'onde d'entrée 7 qui assurent le couplage entre les émetteurs élémentaires 6 et la lentille interférométrique 8, ainsi que des guides d'onde de sortie 9 qui assurent le couplage entre la lentille interférométrique 8 et les photodétecteurs 10. Le dispositif de commande est dit intégré dans la mesure où les guides d'onde 7, 9, la lentille interférométrique 8 et les photodétecteurs 10 sont réalisés sur ou à partir de la puce de commande.

Les N guides d'onde d'entrée 7 raccordent la deuxième extrémité des émetteurs élémentaires 6 à la face d'entrée 8.1 de la lentille interférométrique 8. Ils présentent des chemins optiques identiques d'un guide d'onde d'entrée 7 à l'autre, de manière à ne pas dégrader l'information de phase (valeur de $\Delta\varphi$) portée par les signaux optiques transmis (non diffractés) par les émetteurs élémentaires 6.

Comme décrit en détail plus loin, ils présentent chacun au moins deux parties, à savoir : une première partie 7.1 dans laquelle les guides d'onde d'entrée 7 s'étendent de manière parallèle entre eux à partir des émetteurs élémentaires 6, et une deuxième partie 7.2 dans laquelle les guides d'onde d'entrée 7 s'étendent jusqu'à la face d'entrée 8.1 de la lentille interférométrique 8.

Dans la première partie 7.1, les guides d'onde d'entrée 7 peuvent présenter une même longueur. Dans la deuxième partie 7.2, ils sont raccordés à la face d'entrée 8.1 de manière orthogonale à celle-ci, c'est-à-dire que chaque guide d'onde d'entrée 7 est raccordé à un port d'entrée de la face d'entrée 8.1, de manière orthogonale à un plan tangent à celle-ci.

Or, étant donné que la face d'entrée 8.1 de la lentille interférométrique 8 est courbe dans le plan XZ, les longueurs des guides d'onde d'entrée 7 ne sont donc pas identiques d'un guide d'onde d'entrée 7 à l'autre. La longueur $L_e$ correspond ici à la distance entre une première extrémité d'un guide d'onde d'entrée 7 raccordée à un émetteur élémentaire 6 et une deuxième extrémité opposée à la première et raccordée à la face d'entrée 8.1 de la lentille interférométrique 8.

La lentille interférométrique de focalisation 8 relève de l'optique de Fourier, et fournit ainsi sur sa face de sortie 8.1 une transformée de Fourier du champ optique fourni à la face d'entrée 8.1 par les guides d'onde d'entrée 7, et formé des signaux optiques transmis par les émetteurs élémentaires 6. La face de sortie 8.3 forme le plan image de la lentille interférométrique 8, de sorte que le motif de diffraction formé sur la face de sortie 8.3 est corrélé au diagramme d'émission en champ lointain du faisceau lumineux émis par l'émetteur optoélectronique 1.

Pour cela, la lentille interférométrique 8 est définie par la face d'entrée 8.1, la face de sortie 8.3, et une région 8.2 de propagation libre (FPR, pour *Free Propagation Region,* en anglais) située entre les deux faces 8.1, 8.3. Les faces d'entrée 8.1 et de sortie 8.3 sont courbes, le rayon de courbure de chacune étant situé sur l'axe optique $\Delta$ de la lentille interférométrique 8 (ici parallèle à l'axe Z). La lentille interférométrique 8 est planaire puisque s'étendant dans le plan XZ de la puce photonique. Dans la région FPR 8.2, le champ optique est confiné suivant l'axe Y orthogonal au plan XZ de la puce photonique, mais il peut se propager librement dans le plan XZ. La région FPR 8.2 est définie par un milieu d'indice de réfraction homogène dans le plan XZ, à la différence de la lentille GRIN décrite dans l'article de Hulme et al 2015 mentionné précédemment. Autrement dit, la région FPR 8.2 présente un indice de réfraction qui est identique en tout point de cette région 8.2, et de préférence sur toute son épaisseur qui est alors constante sur tout la région 8.2.

Une telle lentille interférométrique 8 est également appelée coupleur en étoile (*star coupler*, en anglais). Elle assure la focalisation au niveau de la face de sortie 8.3 des signaux optiques reçus à la face d'entrée 8.1. Les signaux optiques se propagent dans la région FPR 8.2, interfèrent de manière constructive, et convergent vers une zone ou un point de la ligne focale définie par la face de sortie 8.3 (plan image). La distribution spatiale de l'intensité du champ optique sur la face de sortie 8.3 est donc corrélée au diagramme d'émission en champ lointain de l'émetteur optoélectronique 1. On retrouve ainsi, sur la face de sortie 8.3, les caractéristiques du diagramme d'émission en champ lointain, et on peut en déduire l'angle $\Phi$ que forme en champ lointain le faisceau lumineux de l'émetteur optoélectronique vis-à-vis de l'axe Y et dans le plan XY.

Le dispositif de commande comporte M photodétecteurs 10, couplés à la face de sortie 8.3, par M guides d'onde de sortie 9. Le nombre M peut être égal ou différent au nombre N. Il définit, avec le rayon de la lentille, la résolution du dispositif de commande ainsi que la largeur angulaire d'observation du faisceau lumineux en champ lointain. La résolution du dispositif de commande n'est cependant pas limitée par la taille des ports de la face de sortie. En effet, si le faisceau est situé entre deux ports, il est possible d'extraire précisément sa position en calculant le ratio des intensités des photodiodes connectées aux deux ports adjacents. Les guides d'onde de sortie 9 s'étendent ainsi entre des ports de la face de sortie 8.3 jusqu'à des entrées des photodétecteurs 10. Les ports de sortie sont donc situés le long de la ligne focale de la lentille interférométrique 8.

Le module de commande 11 est connecté aux photodétecteurs 10 ainsi que, avantageusement, aux déphaseurs 5. La commande de ces derniers est assurée à partir des signaux de mesure transmis par les photodétecteurs 10. Les photodétecteurs 10 reçoivent donc des signaux optiques sortant des ports de la face de sortie 8.3, et transmettent au module de commande 11 des signaux de mesure représentatifs de l'intensité optique du champ optique reçu sur la face de sortie 8.3. Le module de commande 11 comporte un calculateur qui, sur la base des signaux de mesure, peut déterminer la valeur de déphasage $\Delta\varphi$ effective entre les signaux optiques circulant dans les bras 4, ainsi qu'une valeur de déphasage $\Delta\varphi$ à appliquer aux signaux optiques par le biais des déphaseurs 5 pour notamment corriger d'éventuelles erreurs de phase.

Il est alors possible de calibrer l'émetteur optoélectronique 1, par exemple appliquant une phase relative $\Delta\varphi$ nulle et en déterminant l'angle $\theta_{cr}$ du pic d'intensité du champ optique reçu sur la face de sortie 8.3 de la lentille interférométrique 8. L'angle $\theta_{cr}$ est défini comme étant l'angle d'inclinaison entre l'axe optique $\Delta$ de la lentille interférométrique 8 et une droite passant par le pic d'intensité sur la face de sortie 8.3 et par un point d'entrée Pe de la lentille interférométrique 8. Une valeur de compensation de la phase relative $\Delta\varphi$ peut ainsi être déterminée s'il a été déterminé qu'une phase relative $\Delta\varphi$ nulle induit un angle $\theta_{cr}$ non nul. Il est également possible de commander en temps réel et avec précision l'émetteur optoélectronique 1, en induisant une phase relative $\Delta\varphi$ prédéfinie, et en déterminant l'angle $\theta_{cr}$ induit (et inversement). On évite ainsi d'avoir recours à un dispositif externe de détection et de mesure du faisceau lumineux en champ lointain émis par l'émetteur optoélectronique, un tel dispositif externe comportant un photodétecteur matriciel situé en regard des émetteurs élémentaires suivant l'axe Y. Par ailleurs, le fait que la lentille interférométrique 8 soit une lentille à région FPR 8.2 à indice de réfraction homogène permet d'éviter que les incertitudes de fabrication de cette lentille n'impactent fortement les performances de l'émetteur optoélectronique 1.

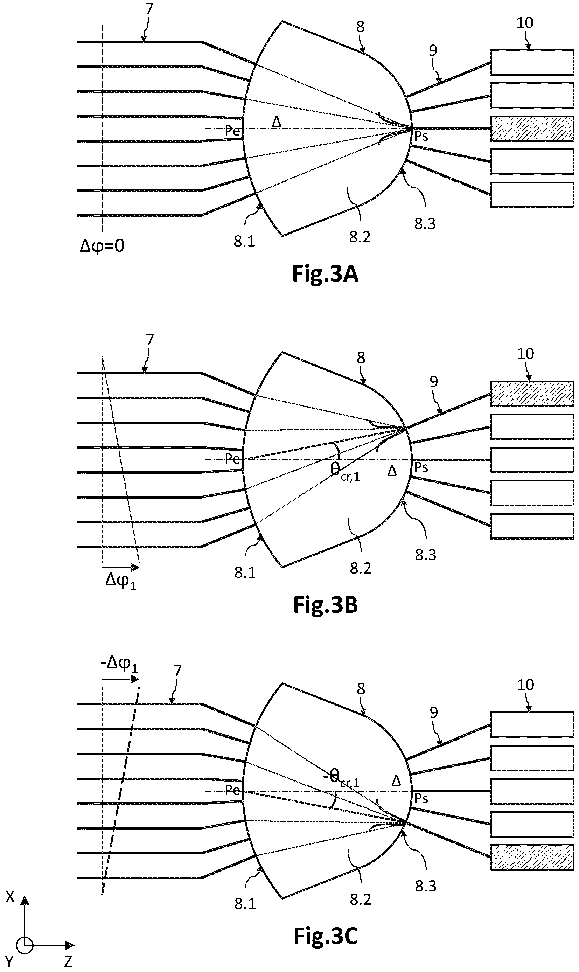

A ce titre, les figures 3A à 3C sont des vues de dessus, schématiques et partielles, de la lentille interférométrique 8 et des photodétecteurs 10. Dans ce cas, une phase relative $\Delta\varphi$ nulle correspond à un angle $\Phi$ nul de l'axe d'émission principal, le pic d'intensité du champ optique sur la face de sortie étant aligné avec l'axe optique $\Delta$ de la lentille interférométrique 8 (fig.3A). En revanche, lorsque la phase relative $\Delta\varphi$ présente une valeur $\Delta\varphi_1$ non nulle, et induit un angle $\Phi_1$ non nul de l'axe d'émission principal, le pic d'intensité sur la face de sortie forme un angle $\theta_{cr,1}$ non nul (fig.3B). Enfin, lorsque la phase relative $\Delta\varphi$ présente une valeur -$\Delta\varphi_1$ non nulle, et induit un angle -$\Phi_1$ non nul de l'axe d'émission principal, le pic d'intensité sur la face de sortie forme un angle -$\theta_{cr,1}$ non nul (fig.3C).

La lentille interférométrique 8 peut présenter un montage de Rowland ou une configuration confocale. Ces deux variantes diffèrent l'une de l'autre essentiellement par la valeur du rayon de courbure du cercle définissant la face de sortie 8.3. Comme détaillé par la suite, elle peut être un coupleur en étoile, ou un réseau échelle qui est un cas particulier du coupleur en étoile.

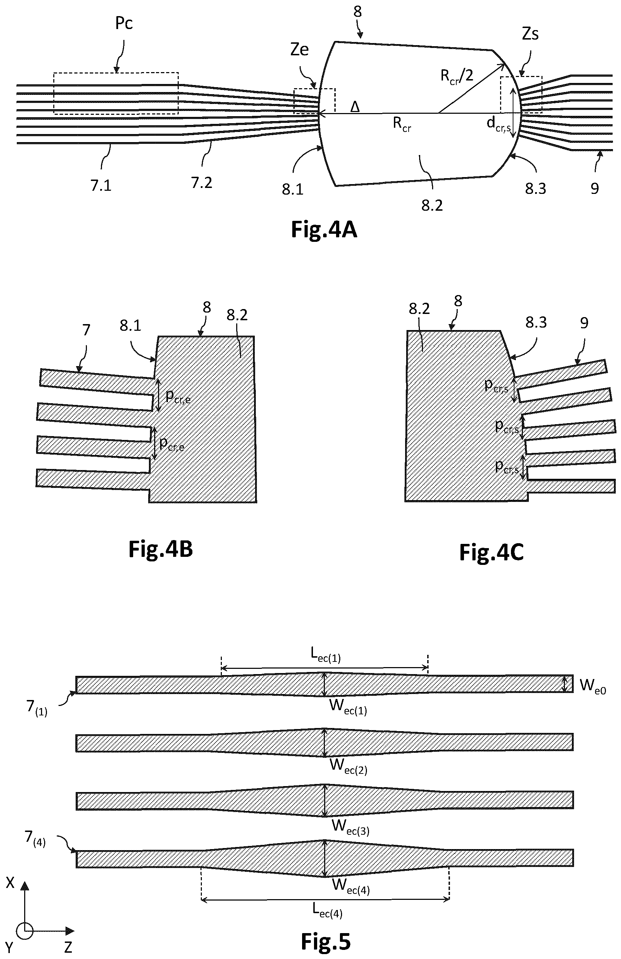

La figure 4A est une vue de dessus, schématique et partielle, d'une partie de l'émetteur optoélectronique selon un mode de réalisation, dans lequel la lentille interférométrique de focalisation présente un montage de Rowland. Les figures 4B et 4C sont des vues de dessus, schématiques et partielles, respectivement de la zone Ze de la face d'entrée 8.1, et de la zone Zs de la face de sortie 8.3 de la lentille interférométrique 8.

En montage de Rowland, la face d'entrée 8.1 est courbe avec un rayon de courbure noté $R_{cr}$, et la face de sortie 8.3 est courbe avec un rayon de courbure $R_{cr}/2$. Le dimensionnement de la lentille interférométrique 8 dépend notamment de la résolution souhaitée de détection du champ optique focalisé sur la face de sortie 8.3, et de l'ouverture angulaire maximale de détection définie par l'angle $2\times\theta_{cr,max}$ autour de l'axe optique $\Delta$.

Plus précisément, l'axe optique $\Delta$ de la lentille interférométrique 8 s'étend ici suivant l'axe Z entre le point d'entrée Pe de la face d'entrée 8.1, et un point de sortie Ps de la face de sortie Ps. Le centre du cercle de Rowland de rayon $R_{cr}$ est situé au point de sortie Ps, et un arc du cercle de Rowland de rayon $R_{cr}$ définit la face d'entrée 8.1. Un arc de cercle de rayon $R_{cr}/2$ définit la face de sortie 8.3, dont le centre est situé sur l'axe optique $\Delta$.

Ainsi, l'angle $\Phi$ du faisceau lumineux en champ lointain dépend de la phase relative $\Delta\varphi$ par la relation suivante : $\Delta\varphi = p_{ee}/\lambda_e\times\sin\Phi$, où $p_{ee}$ est le pas latéral entre les émetteurs élémentaires 6 suivant l'axe X (compris généralement entre $\lambda_e/2$ et $2\lambda_e$). A titre illustratif, la longueur d'onde d'émission $\lambda_e$ peut être égale à 0.905$\mu$m, et le pas latéral $p_{ee}$ être égal à 1.6$\mu$m environ.

L'angle de déviation $\theta_{cr}$ formé par le pic d'intensité du champ optique focalisé sur la face de sortie 8.3 dépend de l'angle $\Phi$ en champ lointain par la relation suivante : $\sin\theta_{cr}=p_{ee}/(\lambda_e\times p_{cr,e}\times\beta_{FPR})\times\sin\Phi$, où $p_{cr,e}$ est le pas latéral entre les ports de la face d'entrée 8.1, et $\beta_{FPR}$ est la constante de propagation dans la région FPR 8.2. Cette relation peut être déduite de l'article de Smit & van Dam intitulé PHASAR-Based WDM-Devices: Principles, Design and Applications, IEEE J. Sel. Top. Quantum Electron, 2 (2), 236-250 (1996). A titre illustratif, le pas latéral $p_{cr,e}$ peut être égal à 1.2$\mu$m environ (ici pour N=16), et la constante $\beta_{FPR}$ être égale à 12.31$\mu$m$^{-1}$ environ. La constante de propagation $\beta_{FPR}$ est égale à $2\pi \times n_{eff,FPR}/\lambda_e$, où $n_{eff,FPR}$ est l'indice effectif du mode optique dans la région FPR. Elle peut être déterminée par une simulation de type éléments finis.

D'une manière générale, l'indice effectif $n_{eff}$ associé à un mode optique supporté par un guide d'onde est défini comme le produit de la constante de propagation $\beta$ et de $\lambda/2\pi$. La constante de propagation $\beta$ dépend de la longueur d'onde $\lambda$ du mode optique, ainsi que des propriétés du guide d'onde (indice de réfraction et dimensions transversales). L'indice effectif du mode optique correspond, d'une certaine manière, à l'indice de réfraction du guide d'onde 'vu' par le mode optique. Il est habituellement compris entre l'indice du cœur et l'indice de la gaine du guide d'onde.

On peut ensuite définir une dimension latérale de sortie $d_{cr,s}$ suivant laquelle s'étendent, suivant l'axe X, les ports de sortie avec un pas latéral $p_{cr,s}$. Elle dépend de l'angle maximal $\Phi_{max}$ que l'on souhaite pouvoir détecter ainsi que du rayon $R_{cr}$. Elle est définie par la relation suivante : $d_{cr,s}=(2\times R_{cr}\times p_{ee})/(\lambda_e \times p_{cr,e}\times\beta_{FPR})\times\sin\Phi_{max}$. Ainsi, à titre illustratif, pour un rayon $R_{cr}$ égal à 310$\mu$m environ, et un angle maximal $\Phi_{max}$ égal à 30° environ, on obtient une dimension latérale de sortie $d_{cr,s}$ égal à 37$\mu$m environ. On peut ici disposer de 25 ports de sortie agencés avec un pas latéral $p_{cr,s}$ égal à 1.5$\mu$m environ.

Aussi, le choix du rayon $R_{cr}$ dépend de la résolution voulue (valeur de $p_{cr,s}$) et de l'ouverture angulaire maximale $2\times\theta_{cr,max}$ de détection souhaitée. On évite ainsi d'avoir à réaliser une lentille à gradient d'indice (*GRIN lens*) comme dans l'exemple de l'art antérieur mentionné précédemment, dont l'obtention peut être techniquement complexe et dont la tolérance de fabrication peut entraîner une dégradation des performances de l'émetteur optoélectronique 1. Au contraire, le fait que la lentille interférométrique 8 soit formée de deux faces courbes 8.1, 8.3 délimitant la région FPR 8.2 d'indice de réfraction homogène permet de simplifier le procédé de fabrication tout en limitant l'impact des tolérances de fabrication sur les performances de l'émetteur optoélectronique 1.

Cependant, les guides d'onde d'entrée 7 sont raccordés à la face d'entrée 8.1 de manière localement orthogonale à celle-ci, c'est-à-dire que chaque guide d'onde d'entrée 7 débouche sur la région FPR 8.2 au niveau de la face d'entrée 8.1 en étant orienté vers le point de sortie Ps de la lentille interférométrique 8 (centre du cercle de rayon $R_{cr}$). Il s'ensuit que les guides d'onde d'entrée 7 ne présentent pas une longueur $L_e$ physique identique d'un guide 7 à l'autre. On note $L_{e(i)}$ la longueur physique d'un guide d'onde d'entrée 7 de rang i, avec i allant de 1 à N, les rangs 1 et N étant situés en bordure du réseau de guides d'onde d'entrée 7.

Les guides d'onde d'entrée 7 présentent alors une portion de correction Pc de l'indice effectif du mode guidé de sorte que les chemins optiques soient identiques d'un guide d'onde d'entrée à l'autre. D'une manière générale, le chemin optique d'un guide d'onde est égal au produit de sa longueur (physique) avec l'indice effectif du mode guidé. Cette portion de correction Pc est située de préférence dans la première partie 7.1 des guides d'onde d'entrée 7. On note $n_{eff,ec(i)}$ l'indice effectif du guide d'onde d'entrée 7 dans la portion de correction Pc, et $n_{eff,e0(i)}$ l'indice effectif du guide d'onde d'entrée 7 en-dehors de la portion de correction Pc. On obtient ainsi également le chemin optique $C_{(i)}=n_{eff,ec(i)}\times L_{ec}+n_{eff,e0(i)}\times(L_e-L_{ec})$ que l'on souhaite constant d'un guide d'onde d'entrée 7 à l'autre.

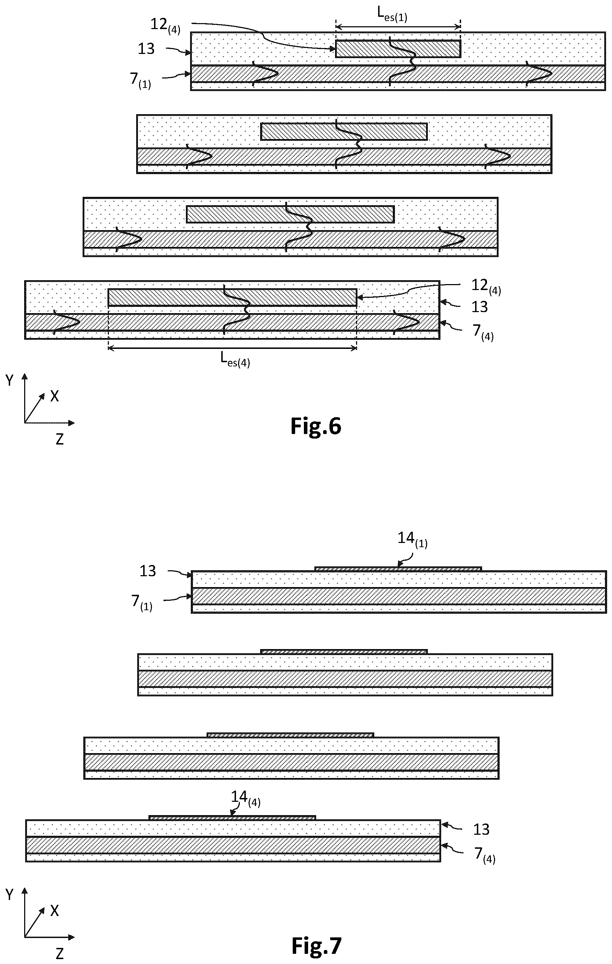

Plusieurs possibilités peuvent être mises en œuvre pour rendre identiques les chemins optiques $C_{(i)}$ des guides d'onde d'entrée 7. Une première possibilité (illustrée sur la fig.5) consiste à modifier les dimensions latérales des guides d'onde d'entrée sur une longueur $L_{ec(i)}$ dans la portion de correction Pc, de manière à corriger l'indice effectif du mode guidé dans chacun des guides d'onde d'entrée. Une deuxième possibilité (illustrée sur la fig.6) consiste à effectuer un couplage modal entre chaque guide d'onde d'entrée 7 avec un guide d'onde additionnel 12 situé en regard suivant l'axe Y et présentant un indice de réfraction différent de celui du guide d'onde d'entrée 7, de manière à obtenir localement et sur une longueur donnée, un supermode. Une troisième possibilité (illustrée sur la fig.7) consiste à moduler l'indice effectif du mode guidé dans chaque guide d'onde d'entrée 7 de manière active, au moyen de déphaseurs thermo-optiques (chaufferettes) additionnels 14.

La figure 5 est une vue de dessus, schématique et partielle, de plusieurs guides d'onde d'entrée 7 au niveau de la portion de correction Pc.

En-dehors de la portion de correction Pc, les guides d'onde d'entrée 7 présentent des mêmes dimensions transversales en épaisseur $e_e$ et en largeur $W_{e0}$, ceci sur une longueur $L_{e(i)}$-$L_{ec(i)}$ où $L_e$ est la longueur totale du guide d'onde d'entrée de rang i entre l'extrémité aval de l'émetteur élémentaire 6 et la face d'entrée 8.1, et où $L_{ec(i)}$ est la longueur de la portion de correction Pc pour ce même guide d'onde d'entrée. On a indiqué précédemment que les longueurs $L_{e(i)}$ sont différentes d'un guide d'onde d'entrée 7 à l'autre dans la mesure où la face d'entrée 8.1 est courbe et que ces guides d'onde d'entrée 7 débouchent sur celle-ci de manière orthogonale. Par ailleurs, la longueur $L_{ec(i)}$ peut être identique ou différente d'un guide d'onde d'entrée à l'autre.

Dans la portion de correction Pc, les guides d'onde d'entrée 7 présentent une dimension transversale maximale, ici la largeur $W_{ec(i)}$, différente d'un guide d'onde d'entrée 7 à l'autre, de sorte que les chemins optiques $C_{(i)}$ des guides d'onde d'entrée 7 soient identiques sur toute leur longueur.

Plus précisément, les guides d'onde d'entrée 7 présentent une variation progressive, ici linéaire, de la largeur W, allant de $W_{e0}$ à $W_{ec(i)}$ et inversement, sur une longueur $L_{ec(i)}$. Ainsi, le guide d'onde d'entrée de rang 1 présente un élargissement linéaire de sa largeur allant de la valeur $W_{e0}$ à $W_{ec(1)}$ sur une longueur $L_{ec(1)}/2$, puis un rétrécissement linéaire allant de $W_{ec(1)}$ à $W_{e0}$ sur une longueur $L_{ec(1)}/2$. La longueur $L_{ec(i)}/2$ est choisie de sorte que la variation de la largeur soit adiabatique, c'est-à-dire sans pertes optiques. Elle peut être au moins égale à $25\mu m$ environ. Les largeurs maximales $W_{ec(i)}$ sont différentes d'un guide d'onde d'entrée 7 à l'autre, de manière à induire une variation de l'indice effectif du mode guidé pour chaque guide d'onde d'entrée 7, cette variation longitudinale de l'indice effectif étant déterminée de sorte que les chemins optiques $C_{(i)}$ des guides d'onde d'entrée 7 soient identiques entre eux sur toute leur longueur. Autrement dit, on ajuste la variation longitudinale de largeur W de sorte que :

$$n_{eff}(W_{e0}) \times \left(L_{e(i)} - L_{ec(i)}\right) + \int_{0}^{L_{ec(i)}} n_{eff}\left(W_{ec(i)}\right)dL = A$$

où A est une constante non nulle identique pour tous les guides d'onde d'entrée.

A titre d'exemple, le guide d'onde d'entrée 7 peut être formé d'un cœur en nitrure de silicium d'indice de réfraction égal à 2 pour la longueur d'onde d'émission $\lambda_e$ égale à 905nm, et présentant une épaisseur constante de 300nm et une largeur $W_{e0}$ de 600nm. Le cœur est entouré d'une gaine en un oxyde de silicium d'indice de réfraction égal à 1.45. Dans ce cas, l'indice effectif $n_{eff,e0}$ pour le mode guidé fondamental de polarisation $TE_{00}$ est égal à 1.72. En revanche, pour une largeur $W_{ec(i)}$ égale à $1\mu m$, l'indice effectif $n_{eff,ec(i)}$ est égal à 1.78.

Aussi, la variation longitudinale de la largeur locale $W_e$ des guides d'onde d'entrée 7 dans la portion de correction Pc induit une variation de l'indice effectif $n_{eff,ec(i)}$ du mode guidé, permettant alors d'égaliser les chemins optiques $C_{(i)}$ des guides d'onde d'entrée 7. Il limite ou écarte toute dégradation de l'information de phase associée aux modes guidés, de sorte que la répartition angulaire d'intensité du champ optique focalisé sur la face de sortie 8.3 de la lentille interférométrique 8 est effectivement corrélée au diagramme d'émission en champ lointain de l'émetteur optoélectronique 1.

Ceci est particulièrement avantageux dans la mesure où le pas latéral des guides d'onde d'entrée est généralement réduit, par exemple ici de l'ordre de $1.5\mu m$, et dépend notamment du pas latéral $p_{ee}$ entre les émetteurs élémentaires 6 (compris entre $\lambda_e/2$ à $2\lambda_e$). Une modification de la longueur $L_{e(i)}$ pour corriger l'écart de chemin optique des guides d'onde d'entrée 7 est alors insuffisante.

La figure 6 est une vue en coupe, schématique et partielle, de plusieurs guides d'onde d'entrée 7 au niveau de la portion de correction Pc selon une variante de réalisation de l'émetteur optoélectronique 1. Les guides d'onde d'entrée 7 sont illustrés en vue éclatée.

Dans ce mode de réalisation, des guides d'onde additionnels 12 sont disposés au regard des guides d'onde d'entrée 7 suivant l'axe Y de manière à autoriser un couplage modal entre les deux guides d'onde 7, 12. Les guides d'onde additionnels 12 présentent un indice de réfraction différent de celui des guides d'onde d'entrée 7, et de préférence supérieur à celui-ci. De préférence, les guides d'onde d'entrée 7 présentent des dimensions transversales (épaisseur et largeur) qui restent constantes sur toute leur longueur $L_{e(i)}$. De préférence également, les guides d'onde supérieurs 12 présentent également des dimensions transversales (épaisseur et largeur) qui restent constantes sur toute leur longueur. Une gaine 13, par exemple réalisée en un oxyde de silicium, entoure les guides d'onde 7 et 12.

Par couplage modal, on entend que le mode guidé circulant dans le guide d'onde d'entrée 7 s'étend spatialement à la fois dans le guide d'onde d'entrée 7 et dans le guide d'onde supérieur 12, formant alors un supermode. Plus précisément, la composante du champ électrique du supermode présente une distribution spatiale qui recouvre le guide d'onde d'entrée 7 ainsi que le guide d'onde supérieur 12. Le couplage modal est assuré par un espacement vertical adapté des guides d'onde supérieurs 12 vis-à-vis des guides d'onde d'entrée 7, égal par exemple à quelques dizaines à centaines de nanomètres.

Ainsi, par le couplage modal entre les deux guides d'onde 7, 12, le mode guidé présente un indice effectif qui est différent dans la portion de correction Pc (dû au couplage modal) de celui hors de la portion de correction. La différence de longueur $L_{es(i)}$ entre les guides d'onde supérieurs 12 dans la portion de correction Pc induit une variation de l'indice effectif du mode guidé pour chacun des guides d'onde d'entrée 7. Ainsi, comme l'illustre la fig.6, la longueur $L_{es(1)}$ du guide d'onde 12 associé au guide d'onde d'entrée 7 de rang 1 présente une valeur inférieure à celle de $L_{es(2)}$, qui est elle-même inférieure à $L_{es(3)}$. Ainsi, le mode guidé circulant dans le guide d'onde 7 de rang 3 présente un chemin optique égal à celui du guide d'onde 7 de rang 2, et à celui du guide d'onde 7 de rang 1. Ainsi, la longueur $L_{es(i)}$ des guides 12 est prédéfinie pour chaque guide d'onde 7 de sorte que les chemins optiques des guides d'onde 7 soient identiques d'une guide 7 à l'autre sur toute leur longueur.

La figure 7 est une vue en coupe, schématique et partielle, de plusieurs guides d'onde d'entrée 7 au niveau de la portion de correction Pc selon une autre variante de réalisation de l'émetteur optoélectronique. Les guides d'onde d'entrée 7 sont illustrés en vue éclatée.

Ici, la variation de l'indice effectif du mode guidé pour chacun des guides d'onde d'entrée 7 est assurée de manière active au moyen de plusieurs déphaseurs additionnels 14, de préférence thermo-optiques pour limiter les pertes optiques, disposés chacun en regard suivant l'axe Y d'un guide d'onde d'entrée 7 dans la portion de correction Pc.

La valeur de la température appliquée par chaque déphaseur additionnel 14 est prédéterminée en fonction de la variation d'indice effectif à obtenir dans chacun des guides d'onde d'entrée 7, de manière à égaliser les chemins optiques $C_{(i)}$ des guides d'onde d'entrée 7. Ainsi, on limite ou évite toute dégradation de l'information de phase portée par les modes guidés dans les guides d'onde d'entrée 7.

Des modes de réalisation particuliers viennent d'être décrits. Différentes variantes et modifications sont possibles sans sortir du cadre de l'invention. En particulier, les différentes variantes décrites précédemment ne sont pas exclusives les unes des autres, mais peuvent être combinées.

La lentille interférométrique 8 peut présenter d'autres types de montage, par exemple un montage confocal. Dans ce cas, la lentille interférométrique 8 diffère de celle décrite sur la fig.2 essentiellement en ce que la face de sortie 8.3 est située en regard de la face d'entrée 8.1 et est définie par le même cercle de Rowland de rayon $R_{cr}$.

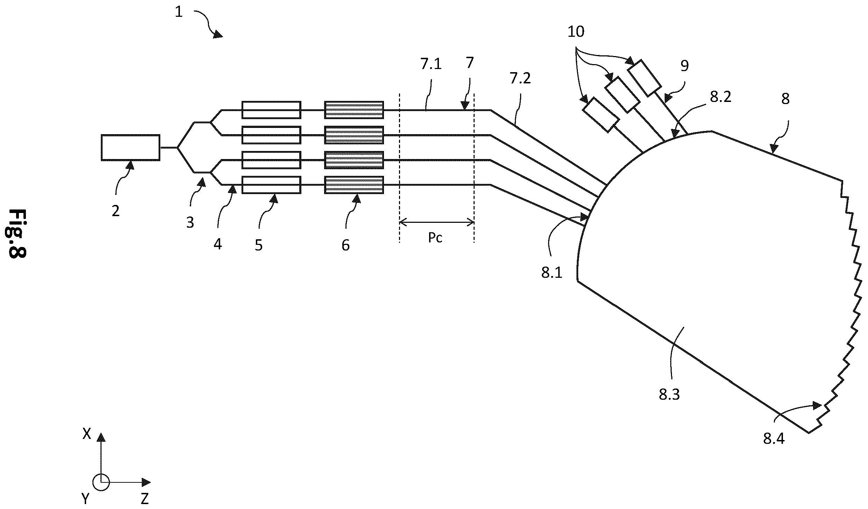

La figure 8 est une vue de dessus, schématique et partielle, d'un émetteur optoélectronique 1 selon un autre mode de réalisation, dans laquelle la lentille interférométrique 8 est un réseau échelle. La face d'entrée 8.1 et la face de sortie 8.3 sont des zones d'une même face courbe définie par le cercle de Rowland de rayon $R_{cr}$. Une face réflectrice 8.4 opposée aux zones d'entrée 8.1 et de sortie 8.3 délimite avec celles-ci la région FPR 8.2 à indice de réfraction homogène. La face réflectrice 8.4 comporte un réseau de réflecteurs élémentaires 8.5 réfléchissant en direction de la ligne focale définissant la face de sortie 8.3 les signaux optiques transmis par les guides d'onde d'entrée 7.

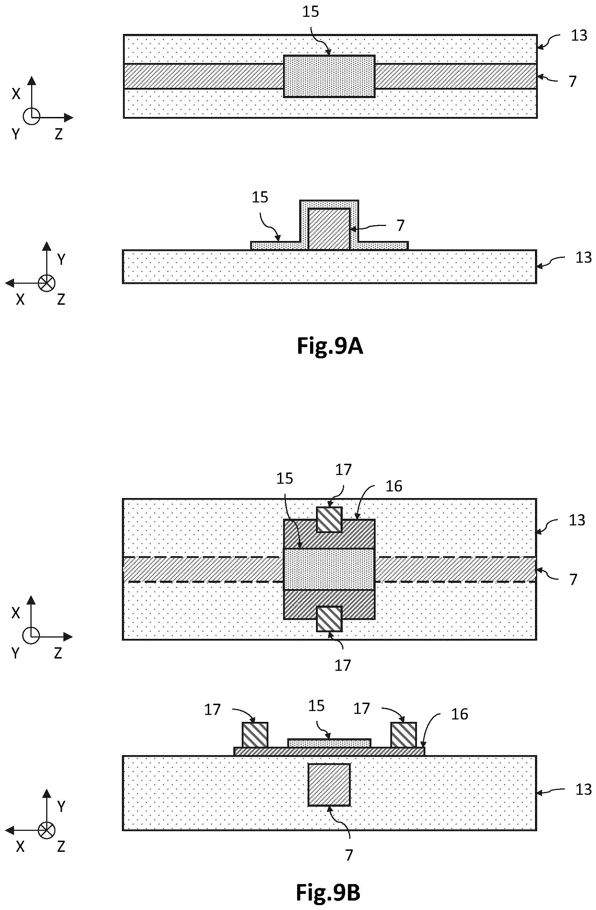

Les figures 9A et 9B sont des vues, schématiques et partielles, de l'un des guides d'onde d'entrée 7 au niveau de la portion de correction Pc selon deux autres variantes de réalisation de l'émetteur optoélectronique. Ici, la variation de l'indice effectif du mode guidé pour chacun des guides d'onde d'entrée 7 est assurée au moyen d'un matériau à changement de phase qui participe à former la gaine du guide d'onde 7. Le matériau à changement de phase peut être choisi notamment parmi les chalcogénures, en particulier de type GST, c'est-à-dire formés à base de germanium Ge, d'antimoine Sb, et de tellure Te. On peut se référer au document de Abdollahramezani et al. intitulé Tunable nanophotonics enabled by chalcogenide phase-change materials, Nanophotonics 2020, 9(5), 1189-1241. Les portions 15 de matériaux à changement de phase appliquent un déphasage relatif, de manière statique ou dynamique, entre les modes guidés dans les guides d'onde d'entrée 7 prédéfini pour chacun d'entre eux de sorte que les chemins optiques des guides d'onde d'entrée 7 sont identiques entre eux.

La fig.9A illustre, en vue de dessus et en coupe transversale, un premier exemple dans laquelle le matériau à changement de phase présente une phase cristalline prédéfinie lors du procédé de fabrication de l'émetteur optoélectronique. Ici, le guide d'onde 7 repose sur un substrat 13 qui participe à former la gaine. Une portion 15 de matériau de changement de phase en couche mince a été déposée sur et autour du guide d'onde 7, et s'étend le long de celui-ci sur une longueur comprise, par exemple, entre $1\,\mu m$ et $100\,\mu m$. Elle présente ici une épaisseur uniforme, par exemple comprise entre 5nm et 100nm. La phase cristalline du matériau à changement de phase a été définie lors du procédé de fabrication, par exemple au moyen d'impulsions laser. L'indice effectif du mode guidé dépend donc de l'indice de réfraction du matériau à changement de phase (qui dépend de sa phase cristalline).

La fig.9B illustre, en vue de dessus et en coupe transversale, un deuxième exemple dans laquelle le matériau à changement de phase présente une phase cristalline qui peut être modifiée de manière dynamique (ou statique) lors du fonctionnement de l'émetteur optoélectronique. Ici, le guide d'onde 7 est enterré dans le substrat 13 qui participe à former la gaine. Une chaufferette 16 est disposée à la surface du substrat 13, au-dessus du guide d'onde 7 et s'étend de part et d'autre de celui-ci suivant l'axe X. Une portion 15 de matériau de changement de phase s'étend sur la chaufferette 16 et au-dessus du guide d'onde 7, sur une longueur comprise, par exemple, entre $1\,\mu m$ et $100\,\mu m$. Elle présente ici une épaisseur uniforme, par exemple comprise entre 5nm et 100nm. Deux électrodes 17 sont au contact de la chaufferette 16. Ainsi, l'application d'une tension électrique entre les électrodes provoque un échauffement de la chaufferette 16, qui induit une variation de la phase cristalline du matériau à changement de phase. L'indice effectif du mode guidé est alors modifié en conséquence.

## Revendications

**1.** Emetteur optoélectronique (1) à antenne réseau à commande de phase sur puce photonique, comportant :

    ◦ un diviseur de puissance (3), destiné à être couplé en entrée à une source laser (2), et couplé en sortie à N guides d'onde (4) formant les bras de l'émetteur optoélectronique (1), avec N>1 ;
    ◦ un réseau de déphaseurs (5) et d'émetteurs élémentaires (6), disposés dans les bras (4), les émetteurs élémentaires (6) étant alignés latéralement et s'étendant de manière parallèle entre eux ;
    ◦ un dispositif de commande intégré comportant :

• des guides d'onde d'entrée (7), couplés aux émetteurs élémentaires (6) ;
• une lentille de focalisation (8), comportant une face d'entrée (8.1) couplée aux guides d'onde d'entrée (7), et une face de sortie (8.3) ;
• des guides d'onde de sortie (9), couplés à la face de sortie (8.3) ;
• des photodiodes (10), couplées aux guides d'onde de sortie (9) ;
• un module de commande (11), adapté à commander les déphaseurs (5) en fonction de signaux reçus par les photodiodes (10) ;

○ **caractérisé en ce que** :

• la lentille de focalisation (8) est une lentille interférométrique dont les faces d'entrée (8.1) et de sortie (8.3) sont courbes et délimitent une région à propagation libre (8.2) d'indice de réfraction homogène, la face de sortie (8.3) s'étendant suivant une ligne focale de la lentille de focalisation (8) ;,
• les guides d'onde d'entrée (7) étant raccordés à la face d'entrée (8.1) de manière orthogonale à celle-ci ;
• un indice effectif des modes guidés, dans une portion dite de correction (Pc) des guides d'onde d'entrée (7), étant adapté de sorte que les chemins optiques ($C_{(i)}$) des guides d'onde d'entrée (7) sont identiques entre eux.

2. Emetteur optoélectronique (1) selon la revendication 1, dans lequel les guides d'onde d'entrée (7) présentent chacun, dans la portion de correction (Pc), une variation d'au moins une dimension transversale, ladite variation de dimension transversale étant prédéfinie pour chaque guide d'onde d'entrée (7) de sorte que les chemins optiques ($C_{(i)}$) des guides d'onde d'entrée (7) sont identiques entre eux.

3. Emetteur optoélectronique (1) selon la revendication 2, dans lequel chaque guide d'onde d'entrée (7) présente, dans la portion de correction (Pc), une variation adiabatique de la largeur, allant d'une valeur de référence $W_{e0}$ identique pour chaque guide d'onde d'entrée (7) à une valeur maximale $W_{ec(i)}$ différente d'un guide d'onde d'entrée (7) à l'autre.

4. Emetteur optoélectronique (1) selon l'une quelconque des revendications 1 à 3, comportant des guides d'onde dits additionnels (12) réalisés en un indice de réfraction différent de celui des guides d'onde d'entrée (7), s'étendant uniquement dans la portion de correction (Pc), et agencés en regard et de manière parallèle aux guides d'onde d'entrée (7) de manière à autoriser un couplage modal avec les guides d'onde d'entrée (7), les guides d'onde additionnels (12) présentant une longueur prédéfinie pour chacun d'entre eux de sorte que les chemins optiques ($C_{(i)}$) des guides d'onde d'entrée (7) sont identiques entre eux.

5. Emetteur optoélectronique (1) selon l'une quelconque des revendications 1 à 4, dans lequel des déphaseurs additionnels (14) sont couplés auxdits guides d'onde d'entrée (7) dans la portion de correction (Pc), et appliquent un déphasage relatif entre les modes guidés dans les guides d'onde d'entrée (7) prédéfini pour chacun d'entre eux de sorte que les chemins optiques ($C_{(i)}$) des guides d'onde d'entrée (7) sont identiques entre eux.

6. Emetteur optoélectronique (1) selon l'une quelconque des revendications 1 à 5, dans lequel une portion (15) d'un matériau à changement de phase, située dans la portion de correction (Pc), est associée à chaque guide d'onde d'entrée (7) et participe à former une gaine de ce dernier, les portions (15) de matériaux à changement de phase appliquant un déphasage relatif, de manière statique ou dynamique, entre les modes guidés dans les guides d'onde d'entrée (7) prédéfini pour chacun d'entre eux de sorte que les chemins optiques ($C_{(i)}$) des guides d'onde d'entrée (7) sont identiques entre eux.

7. Emetteur optoélectronique (1) selon l'une quelconque des revendications 1 à 6, dans lequel la lentille de focalisation (8) est un coupleur en étoile ou un réseau échelle.

8. Emetteur optoélectronique (1) selon l'une quelconque des revendications 1 à 7, dans lequel la lentille de focalisation (8) présente un montage de Rowland ou une configuration confocale.

9. Emetteur optoélectronique (1) selon l'une quelconque des revendications 1 à 8, dans lequel la puce photonique est réalisée à partir d'un substrat SOI.

10. Emetteur optoélectronique (1) selon l'une quelconque des revendications 1 à 9, comportant la source laser (2).

**Patentansprüche**

1. Optoelektronischer Sender (1) mit einer phasengesteuerten Array-Antenne auf einem photonischen Chip, der Folgendes umfasst:

 o einen Leistungsteiler (3), der dazu bestimmt ist, an einem Eingang mit einer Laserquelle (2) gekoppelt zu werden und an einem Ausgang mit N Wellenleitern (4) gekoppelt zu werden, die die Arme des optoelektronischen Senders (1) bilden, wobei N>1;
 o ein Array aus Phasenschiebern (5) und elementaren Sendern (6), die in den Armen (4) angeordnet sind, wobei die elementaren Sender (6) seitlich ausgerichtet sind und sich parallel zueinander erstrecken;
 ∘ eine integrierte Steuervorrichtung, die Folgendes umfasst:

 • Eingangswellenleiter (7), die mit den elementaren Sendern (6) gekoppelt sind;
 • eine Fokussierlinse (8), die eine mit den Eingangswellenleitern (7) gekoppelte Eingangsfläche (8.1) und eine Ausgangsfläche (8.3) umfasst;
 • Ausgangswellenleiter (9), die mit der Ausgangsfläche (8.3) gekoppelt sind;
 • Fotodioden (10), die mit den Ausgangswellenleitern (9) gekoppelt sind;
 • ein Steuermodul (11), das dazu ausgelegt ist, die Phasenschieber (5) als Funktion der von den Fotodioden (10) empfangenen Signale zu steuern;

 o **dadurch gekennzeichnet, dass**:

 • die Fokussierlinse (8) eine interferometrische Linse ist, deren Eingangs- (8.1) und Ausgangsfläche (8.3) gekrümmt sind und einen freien Ausbreitungsbereich (8.2) mit einem homogenen Brechungsindex definieren, wobei sich die Ausgangsfläche (8.3) entlang einer Brennlinie der Fokussierlinse (8) erstreckt;
 • die Eingangswellenleiter (7) orthogonal zu der Eingangsfläche (8.1) mit dieser verbunden sind;
 • ein effektiver Index der Leitermoden in einem Korrekturabschnitt (Pc) der Eingangswellenleiter (7) so ausgelegt ist, dass die optischen Pfade ($C_{(i)}$) der Eingangswellenleiter (7) untereinander identisch sind.

2. Optoelektronische Sender (1) nach Anspruch 1, wobei die Eingangswellenleiter (7) jeweils im Korrekturabschnitt (Pc) eine Variation von mindestens einer Querabmessung aufweisen, wobei die Variation der Querabmessung für jeden Eingangswellenleiter (7) so vordefiniert ist, dass die optischen Pfade ($C_{(i)}$) der Eingangswellenleiter (7) untereinander identisch sind.

3. Optoelektronischer Sender (1) nach Anspruch 2, wobei jeder Eingangswellenleiter (7) im Korrekturabschnitt (Pc) eine adiabatische Variation der Breite aufweist, die von einem Referenzwert $W_{e0}$, der für jeden Eingangswellenleiter (7) identisch ist, bis zu einem Maximalwert $W_{ec(i)}$ reicht, der sich von einem Eingangswellenleiter (7) zum anderen unterscheidet.

4. Optoelektronischer Sender (1) nach einem der Ansprüche 1 bis 3, der zusätzliche Wellenleiter (12) umfasst, die aus einem anderen Brechungsindex als dem der Eingangswellenleiter (7) bestehen, sich nur in den Korrekturabschnitt (Pc) erstrecken und gegenüberliegend und parallel zu den Eingangswellenleitern (7) angeordnet sind, um eine modale Kopplung mit den Eingangswellenleitern (7) zu ermöglichen, wobei die zusätzlichen Wellenleiter (12) eine vordefinierte Länge für jeden von ihnen aufweisen, so dass die optischen Pfade ($C_{(i)}$) der Eingangswellenleiter (7) untereinander identisch sind.

5. Optoelektronischer Sender (1) nach einem der Ansprüche 1 bis 4, wobei zusätzliche Phasenschieber (14) mit den Eingangswellenleitern (7) im Korrekturabschnitt (Pc) gekoppelt sind und eine relative Phasenverschiebung zwischen den Leitermodi in den Eingangswellenleitern (7) anwenden, die für jeden von ihnen so vordefiniert ist, dass die optischen Pfade ($C_{(i)}$) der Eingangswellenleiter (7) untereinander identisch sind.

6. Optoelektronischer Sender (1) nach einem der Ansprüche 1 bis 5, wobei ein Abschnitt (15) eines Phasenwechselmaterials, der sich im Korrekturabschnitt (Pc) befindet, mit jedem Eingangswellenleiter (7) verbunden ist und daran beteiligt ist, eine Umhüllung desselben zu bilden, wobei die Abschnitte (15) der Phasenwechselmaterialien eine relative statische oder dynamische Phasenverschiebung zwischen den Leitermoden in den Eingangswellenleitern (7) anwenden, die für jeden von ihnen so vordefiniert ist, dass die optischen Pfade ($C_{(i)}$) der Eingangswellenleiter (7) untereinander identisch sind.

7. Optoelektronischer Sender (1) nach einem der Ansprüche 1 bis 6, wobei die Fokussierlinse (8) ein Sternkoppler oder ein Blazegitter ist.

8. Optoelektronischer Sender (1) nach einem der Ansprüche 1 bis 7, wobei die Fokussierlinse (8) einen Rowland-Aufbau oder eine konfokale Konfiguration aufweist.

9. Optoelektronischer Sender (1) nach einem der Ansprüche 1 bis 8, wobei der photonische Chip aus einem SOI-Substrat besteht.

10. Optoelektronischer Sender (1) nach einem der Ansprüche 1 bis 9, der die Laserquelle (2) umfasst.


**Claims**

1. An optoelectronic transmitter (1) with a phased array antenna on a photonic chip, comprising:

   ○ a power splitter (3), intended to be coupled at its input to a laser source (2), and coupled at its output to N waveguides (4) forming the arms of the optoelectronic transmitter (1), with N>1;
   ○ an array of phase shifters (5) and elementary emitters (6), arranged in the arms (4), the elementary emitters (6) being laterally aligned and extending parallel to each other;
   ○ an integrated control device comprising:

   • input waveguides (7), coupled to the elementary emitters (6);
   • a focusing lens (8), comprising an input face (8.1) coupled to the input waveguides (7), and an output face (8.3);
   • output waveguides (9), coupled to the output face (8.3);
   • photodiodes (10), coupled to the output waveguides (9);
   • a control module (11), adapted to control the phase shifters (5) based on signals received by the photodiodes (10);

   ○ **characterised in that**:

   • the focusing lens (8) is an interferometric lens whose input (8.1) and output (8.3) faces are curved and delimit a free propagation region (8.2) with a homogeneous refractive index, the output face (8.3) extending along a focal line of the focusing lens (8);
   • the input waveguides (7) being connected to the input face (8.1) orthogonally thereto;
   • an effective index of the guided modes, in a portion called correction portion (Pc) of the input waveguides (7), being adapted such that the optical paths ($C_{(i)}$) of the input waveguides (7) are identical to each other.

2. The optoelectronic transmitter (1) according to claim 1, wherein the input waveguides (7) each have, in the correction portion (Pc), a variation of at least one transverse dimension, said variation of transverse dimension being predefined for each input waveguide (7) such that the optical paths ($C_{(i)}$) of the input waveguides (7) are identical to each other.

3. The optoelectronic transmitter (1) according to claim 2, wherein each input waveguide (7) has, in the correction portion (Pc), an adiabatic variation of the width, ranging from an identical reference value $W_{e0}$ for each input waveguide (7) to a maximum value $W_{ec(i)}$ different from one input waveguide (7) to another.

4. The optoelectronic transmitter (1) according to any one of claims 1 to 3, comprising waveguides called additional waveguides (12) made in a refractive index different from that of the input waveguides (7), extending only in the correction portion (Pc), and arranged opposite and parallel to the input waveguides (7) so as to enable a modal coupling with the input waveguides (7), the additional waveguides (12) having a predefined length for each of them such that the optical paths ($C_{(i)}$) of the input waveguides (7) are identical to each other.

5. The optoelectronic transmitter (1) according to any one of claims 1 to 4, wherein additional phase shifters (14) are coupled to said input waveguides (7) in the correction portion (Pc), and apply a relative phase shift between the guided modes in the input waveguides (7) which is predefined for each of them such that the optical paths ($C_{(i)}$) of the input waveguides (7) are identical to each other.

6. The optoelectronic transmitter (1) according to any one of claims 1 to 5, wherein a portion (15) of a phase-change material, located in the correction portion (Pc), is associated with each input waveguide (7) and contributes to forming a cladding for the latter, the portions (15) of phase-change materials applying a relative phase shift, statically or dynamically, between the guided modes in the input waveguides (7) which is predefined for each of them such that the optical paths ($C_{(i)}$) of the input waveguides (7) are identical to each other.

7. The optoelectronic transmitter (1) according to any one of claims 1 to 6, wherein the focusing lens (8) is a star coupler or an echelle grating.

8. The optoelectronic transmitter (1) according to any one of claims 1 to 7, wherein the focusing lens (8) has a Rowland or a confocal configuration.

9. The optoelectronic transmitter (1) according to any one of claims 1 to 8, wherein the photonic chip is produced from an SOI substrate.

10. The optoelectronic transmitter (1) according to any one of claims 1 to 9, comprising the laser source (2).

**Fig.1A**

**Fig.1B**

**Fig.2**

**Fig.3A**

**Fig.3B**

**Fig.3C**

**Fig.4A**

**Fig.4B**

**Fig.4C**

**Fig.5**

$L_{es(1)}$

$12_{(4)}$

13

$7_{(1)}$

$12_{(4)}$

13

$7_{(4)}$

$L_{es(4)}$

Y

X

Z

**Fig.6**

$14_{(1)}$

13

$7_{(1)}$

$14_{(4)}$

13

$7_{(4)}$

Y

X

Z

**Fig.7**

**Fig.8**

**Fig.9A**

**Fig.9B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018160729 A2

**Littérature non-brevet citée dans la description**

- **HULME et al.** Fully integrated hybrid silicon two dimensional beam scanner. *Opt. Express*, 2015, vol. 23 (5), 5861-5874
- **SMIT** ; **VAN DAM**. PHASAR-Based WDM-Devices: Principles, Design and Applications. *IEEE J. Sel. Top. Quantum Electron*, 1996, vol. 2 (2), 236-250
- **ABDOLLAHRAMEZANI et al.** Tunable nanophotonics enabled by chalcogenide phase-change materials. *Nanophotonics*, 2020, vol. 9 (5), 1189-1241